# EUROPEAN PATENT SPECIFICATION

(11) **EP 0 821 184 B1**
(45) Date of publication and mention of the grant of the patent: **30.05.2001**
(21) Application number: 97111751.0
(22) Date of filing: 10.07.1997
(51) Int. Cl.: F16H 25/16, D03D 47/27

(54) **Arrangement including a weaving loom having a gripper strap and a device to change a continuous rotary motion into a reciprocating rotary motion**
Anordnung mit einem Webstuhl und einem Getriebe zum Umwandeln einer kontinuierlich drehenden Bewegung in eine oszillierende Drehbewegung
Dispositif avec un métier de tisser et une transmission pour convertir un mouvement de rotation continu en mouvement circulaire alternatif

(30) Priority: 22.07.1996 IT MI961523
(43) Date of publication of application: 28.01.1998
(73) Proprietor: Promatech S.p.A., 24020 Colzate (Bergamo) (IT)
(72) Inventor: Casarotto, Guiseppe, 24128 Bergamo (IT); Gallizioli, Angelo, 24026 Leffe, Bergamo (IT)
(74) Representative: Vatti, Paolo, Dr. Ing.

(56) References cited:
- GB-A- 2 177 429
- US-A- 5 275 116
- PATENT ABSTRACTS OF JAPAN vol. 015, no. 358 (M-1156), 10 September 1991 & JP 03 140659 A (NIPPON VALQUA IND LTD;OTHERS: 01), 14 June 1991,

## Description

The present invention concerns an arrangement including a weaving loom having a gripper strap and a device to change a continuous rotary motion into a reciprocating rotary motion.

It is common knowledge that the gripper strap in looms moves with a reciprocating rectilinear motion under the control of a gearwheel moved by a reciprocating rotary motion, and that, as it happens for other loom components, also said gearwheel is operated by the main shaft of the loom which moves with a continuous rotary motion. One of the main problems of looms thus consists in suitably changing said continuous rotary motion into the reciprocating rotary motion required to operate said gearwheel. Although several devices have been realized to obtain this change of motion, the problem still needs to be solved due to the particularly strict requirements involved, determined by the increasingly high working speeds of looms and by the considerable masses - moving with a reciprocating rotary motion - which have to be controlled.

The IT-B-1204675 (EP-A-293 965) as the closest prior art describes an arrangement wherein the main shaft of the loom carries at one end a ball cam, onto the profile of which engage two cam followers, of the type with rollers, mounted on a lever oscillating about an axis perpendicular to the axis of the main shaft and lying on the same plane, the alternate back and forth motion of the lever being then transmitted to an arm and subsequently, through some gears, to the gearwheel controlling the gripper strap.

The EP-A1-592359 describes a device to control a gripper strap having a particular curved profile, moved by a continuous rotary motion, and a lever engaged with the curved profile, to which the profile imparts a reciprocating rotary motion.

In the first of these devices, the main shaft - or a shaft connected thereto by a kinematic motion - carries, cantilevered on its end, the cam or the profile which determine the change of motion, with all the negative consequences deriving therefrom, both from the constructive (planning and dimensioning problems) and from the functional (imprecisions and inertias) point of view. This occurs - at least for what concerns the main embodiment - also in the case of EP-A1-592359, which moreover involves an extremely complex and costly construction.

These drawbacks are brilliantly overcome by the present invention, which concerns a device to change the continuous rotary motion of a shaft into a reciprocating rotary motion of a gearwheel which controls the motion of said gripper strap, said device comprising a cam, a pair of cam followers, a body, an arm, a connecting od and a sector gear, wherein said cam is fixed onto said shaft, so as to rotate therewith, said pair of cam followers are caused to oscillate, when rolling on said cam, about an axis of said body housing said cam followers and transmitting through said arm the reciprocating motion to said connecting rod which causes the oscillation of said sector gear which drives said gear wheel, characterised in that said cam has two projecting profiles onto each of which engages one of said cam followers, and said axis of said cam and said axis about which oscillates said body housing said cam followers are at right angles and skew.

Due to the particular construction according to the present invention, the cam can be mounted on its shaft in an intermediate position, so that said shaft can be supported at its ends by a pair of supports with bearings, thereby eliminating the need to mount the cam cantilevered.

Further characteristics and advantages of the arrangement according to the present invention will anyhow result more evident from the following detailed description of a preferred embodiment thereof referring, only by way of non-limiting example, to the device to change the continuous rotary motion of a shaft into a reciprocating rotary motion of a gear wheel, in the arrangement itself, illustrated on the accompanying drawings, in which:
fig. 1 is a part section view of the device according to the present invention;
fig. 2 is a side view, with separate parts, of the shaft-cam unit; and
fig. 3 shows a constructive variant of said shaft-cam unit.

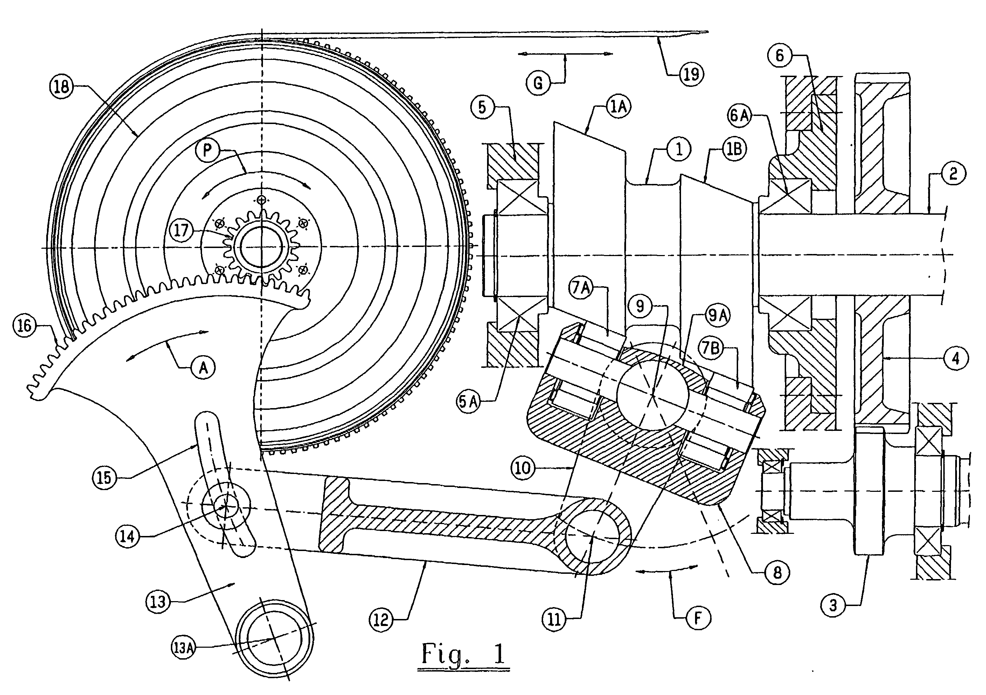

As shown in fig. 1, in the arrangement according to the present invention a cam 1 is fixed onto the shaft 2, in an intermediate position thereof, and it has two inclined projecting profiles 1A and 1B.

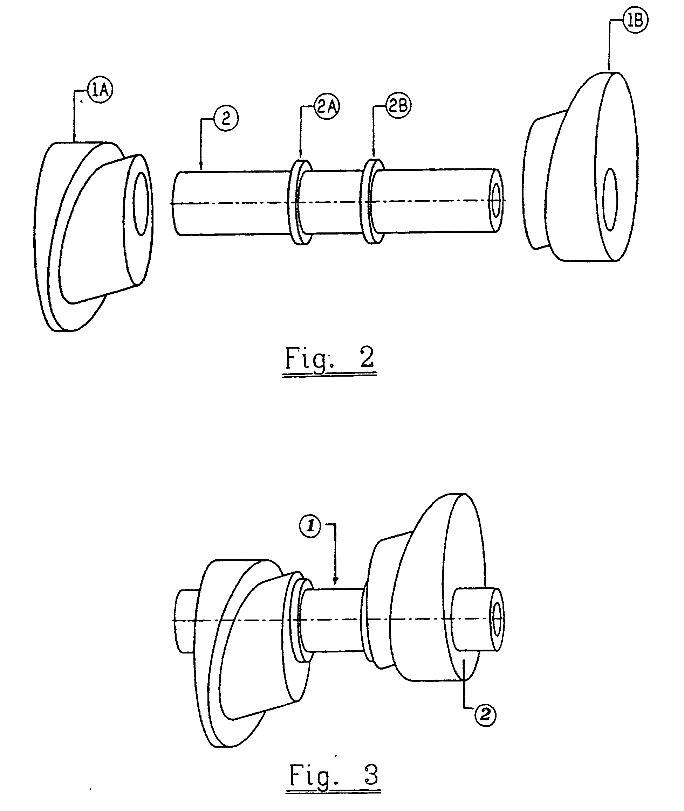

More particularly - in a convenient form of construction illustrated in fig. 2 - the cam 1 is formed by two disk members with inclined projecting profiles 1A, 1B, shown disassembled in respect of the shaft 2. As it appears evident, in assembly, said disk members are caused to slide along the shaft 2, until they abut against two stops 2A, 2B. They can then be, for instance, keyed onto said shaft 2, or fixed thereto in other known manner.

Alternatively, as illustrated in fig. 3, the cam 1 can be formed in one piece with the shaft 2, by forging or pressing, and then be finished by machining.

The shaft 2 is caused to perform a rotary motion by the main shaft of the loom (not shown on the drawing) thanks to a drive, of which two gears 3 and 4 are shown in fig. 1. The gear 4 is fixed on the shaft 2 in any known manner (for instance, by keying or forcing).

Due to the setback position of the cam 1 on the shaft 2, said shaft can be rested on two supports 5 and 6, by way of bearings 5A and 6A respectively, thereby considerably reducing the stresses imparted on the shafts of prior art devices which usually carry the cam in a cantilevered position.

Two cam followers 7A and 7B - for instance of the type with rollers - engage onto the projecting profiles 1A and 1B of the cam 1, said cam followers being housed into a common body 8 apt to oscillate about an axis 9 in the directions of the double arrow F, the axis 9 being orthogonal to and skew in respect of the axis of the cam 1, as it lies on a different plane. The axis 9 can advantageously be formed by two opposite pins 9A projecting from the body 8.

The body 8 comprises, on the side opposite to the cam followers 7A and 7B, an arm 10 pivoted in 11 onto an end of a connecting rod 12, substantially parallel to the shaft 2 supporting the cam 1. The connecting rod 12 is pivoted at its other end onto a sector gear 13 by way of a pin 14, movable for adjustment into a slot 15 of the sector gear 13. The sector gear 13, pivotally mounted at its end onto a pin 13A, has its toothing 16 engaged with a gearwheel 17 fixed to the gearwheel 18 which controls the movement of the gripper strap 19.

While the loom is working, the main shaft thereof moves about its axis with a continuous rotary motion. Through the gear 3 it transmits its rotary motion to the gear 4, and thus to the shaft 2 of the cam 1 onto which the gear 4 is fixed. Thanks to mounting of the shaft 2 on the two supports 5 and 6 with bearings 5A and 6A, said shaft transmits to the cam 1 a particularly regular and precise rotary motion. When the cam 1 rotates, its projecting profiles 1A and 1B impart on the cam followers 7A and 7B - in constant engagement with said profiles - changes of position such as to cause the body 8, and thus the arm 10 thereof, to oscillate about the axis 9. This allows to obtain, as desired, a very precise and regular change of the continuous rotary motion (about the axis of the shaft 2) into a reciprocationg rotary motion (about the axis 9).

The members of the device downstream of those just described simply have the function to transmit the reciprocating rotary motion, thus obtained, to the rest of the mechanism. Said motion is transmitted in known manner by the arm 10 to the connecting rod 12, by way of the pivoting point 11. The connecting rod 12, thanks to its pivoting by way of the pin 14 in correspondence of the slot 15, then causes the movement in the directions of the double arrow A of the sector gear 13 pivotally mounted in 13A. The position of said pivoting pin 14, being adjustable along the slot 15, allows to vary the oscillation angle of the sector gear 13, and thus the amplitude of the reciprocating rotary motion of the gearwheel 18, which said sector gear controls through the gearwheel 17.

The gearwheel 18 thus rotates alternately in the directions of the double arrow P and controls in known manner the gripper strap 19, which thereby moves in the directions of the double arrow G.

According to a particularly advantageous constructive variant, the seats for the supports 5 and 6 of the shaft 2 carrying the cam 1, and the seats for the supports of the projecting pins 9A of the body 8 housing the cam followers 7A and 7B, are formed into a casing provided with simple or flanged covers (not shown); thanks to this arrangement, an adjustment to eliminate the slacks or to supply the required preloading is no longer necessary.

According to another particularly advantageous constructive variant, the body 8 is formed with two arms of equal length, positioned at 180° one in respect of the other, allowing to thus balance the loads on the rollers of the cam followers 7A and 7B.

From the previous description it can be easily understood how the device according to the present invention allows to obtain, in a simple and efficient manner, the change of a continuous rotary motion into a reciprocating rotary motion, while brillantly solving the problems present in the solutions of prior art.

In particular, the fact that the shaft on which the cam is mounted is carried by two supports with bearings, with no cantilevered parts, guarantees a more rational construction and a more precise working of the device. The axial loads and the torques resulting therefrom are hence drastically reduced, both on the shaft carrying the cam and on the cam followers unit. The rollers of the cam followers are in turn subject to limited wear - the differences of pheripheral speed being very slight - due to sliding frictions determined by scarce differences in the distance between the periphery of the rollers and the cam rotation axis.

The device according to the invention has been described with reference to its use in looms, but it could of course be adopted - without thereby departing from the scope of the present invention - in any other case wherein it may be necessary to obtain, with requirements of the same type, the change from a continuous rotary motion into a reciprocating rotary motion.

## Claims

1. An arrangement including a weaving loom having a gripper strap and a device to change the continuous rotary motion of a shaft (2) into a reciprocating rotary motion of a gearwheel (18) which controls the motion of said gripper strap, said device comprising a cam (1), a pair of cam followers (7A, 7B), a body (8), an arm (10), a connecting rod (12) and a sector gear (13), wherein
- said cam (1) is fixed onto said shaft (2), so as to rotate therewith,
- said pair of cam followers (7A, 7B) are caused to oscillate, when rolling on said cam (1), about an axis (9) of said body (8) housing said cam followers and transmitting through said arm (10) the reciprocating motion to said connecting rod (12) which causes the oscillation of said sector gear (13) which drives said gear wheel (18),
**characterized** in that
- said cam (1) has two projecting profiles (1A, 1 B) onto each of which engages one of said cam followers (7A, 7B), and
- said axis of said cam (1) and said axis (9) about which oscillates said body (8) housing said cam followers (7A, 7B) are at right angles and skew.

2. Arrangement as in claim 1, wherein said cam (1) is mounted on the shaft (2) in an intermediate position thereof.

3. Arrangement as in claims 1 and 2, wherein said shaft (2) is carried by a pair of supports (5, 6) with bearings (5A, 6A), between which said cam (1) is positioned.

4. Arrangement as in any one of claims 1 to 3, wherein said cam (1) is formed by two disk members having said projecting profiles (1A, 1B) and keyed on said shaft (2).

5. Arrangement as in any one of claims 1 to 3, wherein said cam (1) is formed in one piece with the shaft (2).

6. Arrangement as in any one of the previous claims, wherein the oscillation axis (9) of said body (8) housing the cam followers (7A, 7B) is formed by two opposite pins (9A) projecting from said body (8).

7. Arrangement as in any one of claims 3 to 5, wherein the seats for the supports (5, 6) of the shaft (2) carrying the cam (1) and the seats for the oscillation pins (9A) of the body (8) housing the cam followers (7A, 7B) are formed into a single casing.

8. Arrangement as in any one of the previous claims, wherein said sector gear (13) is pivotally mounted at its end on a pin (13A) and carries a slot (15), wherein a pin (14) is provided on the end of said connecting rod (12), which is adjustable along said slot so as to allow variation of the oscillation angle of said sector gear.

## Patentansprüche

1. Eine Anordnung mit einer Webmaschine, die einen Greiferriemen und ein Gerät zum Ändern der kontinuierlichen Drehbewegung von einer Welle (2) in eine Hin- und Herdrehung eines Zahnrades (18), das die Bewegung des Greiferriemens steuert, aufweist, wobei das Gerät einen Nocken (1), ein Paar von Nockenfolgern (7A, 7B), einen Körper (8), einen Arm (10), eine Verbindungsstange (12) und einen Zahnkreissektor (13) aufweist, und
- der Nocken (1) auf der Welle befestigt ist, so daß er sich mit dieser dreht,
- das Paar von Nockenfolgern (7A, 7B) dazu veranlaßt wird, bei einem Rollen auf dem Nocken um eine Achse (9) des Körpers (8) zu schwingen, der die Nockenfolger aufnimmt und die Hin- und Herbewegung über den Arm (10) auf die Verbindungsstange (12), die die Schwingung des Zahnkreissektors (13), der das Zahnrad (18) antreibt, überträgt,
dadurch gekennzeichnet, daß
- der Nocken (1) zwei vorragende Profile (1A, 1B), auf denen jeweils einer der Nockenfolger läuft, hat, und
- die Achse des Nockens (1) und die Achse (9), um die der Körper (8), der die Nockenfolger (7A, 7B) aufnimmt, rechtwinklig und schräg zueinander verlaufen.

2. Anordnung nach Anspruch 1, wobei der Nocken (1) mittig auf der Welle (2) befestigt ist.

3. Anordnung nach Anspruch 1 oder 2, wobei die Welle (2) durch ein Paar von Stützen (5, 6) mit Lagern (5A, 6A), zwischen denen der Nocken positioniert ist, getragen wird.

4. Anordnung nach einem der Ansprüche 1 bis 3, wobei der Nocken (1) von zwei Scheiben gebildet wird, die die vorragenden Profile haben und auf der Welle (2) verkeilt sind.

5. Anordnung der Nocken (1) einstückig mit der Welle (2) ausgebildet ist.

6. Anordnung nach einem der vorangehenden Ansprüche, wobei die Schwingungsachse (9) des Körpers (8), der die Nockenfolger (7A, 7B) aufnimmt, durch zwei gegenüberliegende Stifte (9A) gebildet wird, die von dem Körper (8) vorragen.

7. Anordnung nach einem der Ansprüche 3 bis 5, wobei-der Sitz für die Stützen (5, 6) der Welle (2), die den Nocken (1) trägt, und die Sitze für die Schwingungsstifte (9A) des Körpers (8), der die Nockenfolger (7A, 7B) aufnimmt, in einem einzigen Gehäuse ausgeformt sind.

8. Anordnung nach einem der vorangehenden Ansprüche, wobei der Zahnkreissektor (13) drehbar an seinem Ende auf einem Stift (13A) befestigt ist und einen Schlitz (15) aufweist, wobei ein Stift (14) auf den Ende der Verbindungsstage (12) vorgesehen ist, der entlang des Schlitzes einstellbar ist, um eine Änderung des Schwingungswinkels des Zahnkreissektors zu erlauben.

## Revendications

1. Agencement comprenant un métier à tisser comportant une courroie de pince et un dispositif pour changer le mouvement de rotation continu d'un arbre (2) en un mouvement de rotation alternatif d'une roue d'engrenage (18) qui commande le mouvement de ladite courroie de pince, ledit dispositif comprenant une came (1), une paire de suiveurs de came (7A, 7B), un corps (8), un bras (10), une bielle (12) et un secteur denté (13), dans lequel
ladite came (1) est fixée sur ledit arbre (2), de manière à tourner avec lui,
ladite paire de suiveurs de came (7A, 7B) est amenée à osciller, lorsqu'elle roule sur ladite came (1), autour d'un axe (9) dudit corps (8) logeant lesdits suiveurs de came et transmettant via ledit bras (10) le mouvement alternatif à ladite bielle (12) qui provoque l'oscillation dudit secteur denté (13) qui commande ladite roue d'engrenage (18),
caractérisé en ce que
ladite came (1) comporte deux profils en saillie (lA, 1B) sur chacun desquels s'engage l'un desdits suiveurs de came (7A, 7B), et
ledit axe de ladite came (1) et ledit axe (9) autour duquel oscille ledit corps (8) logeant lesdits suiveurs de came (7A, 7B) sont orthogonaux et obliques.

2. Agencement selon la revendication 1, dans lequel ladite came (1) est montée sur l'arbre (2) en une position intermédiaire de celui-ci.

3. Agencement selon les revendications 1 et 2, dans lequel ledit arbre (2) est supporté par une paire de supports (5, 6) avec des paliers (5A, 6A), entre lesquels ladite came (1) est positionnée.

4. Agencement selon l'une quelconque des revendications 1 à 3, dans lequel ladite came (1) est formée par deux éléments formant disques comportant lesdits profils en saillie (1A, 1B) et calés sur ledit arbre (2).

5. Agencement selon l'une quelconque des revendications 1 à 3, dans lequel ladite came (1) est formée d'un seul tenant avec l'arbre (2).

6. Agencement selon l'une quelconque des revendications précédentes, dans lequel l'axe d'oscillation (9) dudit corps (8) logeant les suiveurs de came (7A, 7B) est formé par deux tiges opposées (9A) en saillie depuis ledit corps (8).

7. Agencement selon l'une quelconque des revendications 3 à 5, dans lequel les sièges pour les supports (5, 6) de l'arbre (2) supportant la came (1) et les sièges pour les tiges d'oscillation (9A) du corps (8) logeant les suiveurs de came (7A, 7B) sont formés dans un seul boîtier.

8. Agencement selon l'une quelconque des revendications précédentes, dans lequel ledit secteur denté (13) est monté de manière à pivoter à son extrémité sur une tige (13A) et supporte une fente (15), dans lequel une tige (14) est située sur l'extrémité de ladite bielle (12), qui est réglable le long de ladite fente afin de permettre une variation de l'angle d'oscillation dudit secteur denté.
